# EUROPÄISCHE PATENTSCHRIFT

(11) **EP 1 748 851 B1**
(45) Veröffentlichungstag und Bekanntmachung des Hinweises auf die Patenterteilung: **29.07.2009**
(21) Anmeldenummer: 04733340.6
(22) Anmeldetag: 17.05.2004
(51) Int. Cl.: B05B 7/00, F16N 7/32

(54) **VORRICHTUNG UND VERFAHREN ZUM AUFTEILEN EINER MITTELS EINER GASSTRÖMUNG TRANSPORTIERTEN VISKOSEN FLÜSSIGKEIT IN MINDESTENS ZWEI TEILSTRÖMEN**
DEVICE AND METHOD FOR DIVIDING A VISCOUS LIQUID CONVEYED BY A GAS FLOW INTO AT LEAST TWO PARTIAL FLOWS
DISPOSITIF ET PROCEDE POUR REPARTIR UN LIQUIDE VISQUEUX TRANSPORTE PAR ECOULEMENT GAZEUX, EN AU MOINS DEUX COURANTS PARTIELS

(43) Veröffentlichungstag der Anmeldung: 07.02.2007
(73) Patentinhaber: Rebs Zentralschmiertechnik GmbH, 40885 Ratingen-Lintorf (DE)
(72) Erfinder: SCHWARZE, Hermann, 42579 Heiligenhaus (DE)
(74) Vertreter: Cohausz & Florack
(86) Internationale Anmeldenummer: PCT/EP2004/005270
(87) Internationale Veröffentlichungsnummer: WO 2005/113157

(56) Entgegenhaltungen:
- EP-A- 0 625 684
- DE-U1- 29 609 855
- US-A- 4 512 368
- US-A- 4 807 663
- US-A- 5 435 493
- US-A- 6 161 649

## Beschreibung

Die Erfindung betrifft eine Vorrichtung zum Aufteilen einer mittels einer Gasströmung transportierten viskosen Flüssigkeit in mindestens zwei Teilströme. Derartige Vorrichtungen werden beispielsweise in Schmiersystemen an Walzwerken oder Schienenfahrzeugen eingesetzt. Üblicherweise wird dabei ein den jeweiligen Anforderungen genügendes Öl als Schmierstoff mittels eines Luftstromes transportiert.

In den Leitungen eines derartigen Schmiersystems bildet der Schmierstoff aufgrund einer koaxial zum Leitungsverlauf gerichteten turbulenten Gasströmung einen dünnen Film auf den Leitungswänden aus, der eine gleichmäßige Wellenstruktur aufweist. Dieser Schmierstofffilm wird aufgrund der Reibung zwischen den aneinander anliegenden Grenzschichten von Luft und Schmierstoff sowie das Aufprallen der Luftströmung auf die Wellenberge vorangetrieben, ohne dass es zu einer Vermischung der Luft mit dem Schmierstoff kommt. Der wesentliche Vorteil eines derartigen Transports von Schmierstoff zu den Schmierstoffstellen besteht darin, dass der Transport auch kleinster Schmierstoffmengen lageunabhängig erfolgen kann.

Insbesondere wird der Einfluss der Schwerkraft auf das Verteilergebnis minimiert.

Eine weitere Verbesserung der Gleichmäßigkeit, mit der der Schmierstoff auf die verschiedenen Abströmkanäle aufgeteilt wird, konnte dadurch erreicht werden, dass die in der Zuführleitung einströmende turbulente Gasströmung auf eine am Ende einer trichterförmig ausgebildeten Verteilkammer positionierte Prallfläche ausgerichtet wurde. Um diese Prallfläche herum sind die Abströmbohrungen angeordnet. Das in die Verteilkammer einströmende und auf die Prallfläche treffende Gas bildet auf der Prallfläche zunächst eine radial ausgerichtete Prallströmung, die zum wesentlichen Teil an der Mantelfläche des Trichters in eine der Eintrittsströmung entgegengesetzte Mantelströmung umgelenkt wird. Der restliche Teil des Gasstroms dringt zu gleichen Teilen in die Abströmbohrungen ein (DE 296 09 855.8, US4807663, EP 97 923 886.2).

Die voranstehend erläuterte Vorrichtung erfüllt die hinsichtlich der Gleichmäßigkeit der Aufteilung des Schmierstoffs gestellten Anforderungen sicher. Dazu muss allerdings ein erheblicher Fertigungsaufwand in Kauf genommen werden. Dieser wird zum einen durch die komplexe Formgebung der zu verbauenden Bauteile und zum anderen durch die hohe Fertigungsgenauigkeit verursacht, die erforderlich ist, um ein optimales Aufteilergebnis zu gewährleisten.

Ausgehend von dem voranstehend erläuterten Stand der Technik bestand die Aufgabe der Erfindung darin, eine kostengünstiger herstellbare Vorrichtung zu schaffen, mit der sich der Schmierstoff mit hoher Präzision aufteilen lässt. Ebenso sollte ein Verfahren dieser Art geschaffen werden, das sich mit einfach gestalteten Verteilvorrichtungen durchführen lässt.

Diese Aufgabe wird zum einen durch eine Vorrichtung der eingangs angegebenen Art gelöst, die mit einem Zuströmkanal, mit einer Verteilkammer, in der der Zuströmkanal mündet, mit einer in der Verteilkammer ausgebildeten Prallfläche, auf die die Gasströmung trifft, und mit mindestens zwei Abströmkanälen ausgestattet ist, deren jeweilige Einströmöffnung im Randbereich der Prallfläche positioniert ist, wobei erfindungsgemäß eine Mündungsöffnung des Zuströmkanals derart ausgerichtet ist, dass die aus ihr austretende Gas-/ Flüssigkeitsströmung sich in einer um die Längsachse der Verteilkammer umlaufenden Wirbelströmung in Richtung der Prallfläche bewegt.

Zum anderen besteht die Lösung der voranstehend genannten Aufgabe in einem Verfahren zum Aufteilen einer mittels einer Gasströmung transportierten viskosen Flüssigkeit in mindestens zwei Teilströmen mittels einer Vorrichtung, die einen Zuströmkanal, eine Verteilkammer, in der der Zuströmkanal mündet, eine in der Verteilkammer ausgebildete Prallfläche, auf die die Gasströmung trifft, und mindestens zwei Abströmkanäle aufweist, deren jeweilige Einströmöffnung im Randbereich der Prallfläche positioniert ist, wobei erfindungsgemäß die aus der Gasströmung und der viskosen Flüssigkeit gebildete Gas-/ Flüssigkeitsströmung derart in die Verteilkammer der Vorrichtung geleitet wird, dass sie sich in einer um die Längsachse der Verteilkammer umlaufenden Wirbelströmung in Richtung der Prallfläche bewegt.

Gemäß der Erfindung wird eine Wirbelströmung erzeugt, die sich in der Verteilkammer nach Art eines Zyklons ausgehend von der Mündung des Zuströmkanals in Richtung der Prallfläche bewegt. In Folge der Wirbelbildung erfährt die viskose Flüssigkeit, bei der es sich bevorzugt um einen fließfähigen Schmierstoff handelt, eine hohe Zentrifugalbeschleunigung. Dabei legt sich die viskose Flüssigkeit entweder an die Innenumfangsfläche der Verteilkammer an und wird dort durch den schraubenförmig umlaufenden Gasstrom vorangetrieben oder sie wird unmittelbar vom durch die Verteilkammer wirbelnden Gasstrom in Richtung der Prallfläche mitgerissen.

Unabhängig davon, wie die viskose Flüssigkeit in der Prallfläche vorangetrieben oder transportiert wird, so wird sie, wenn sie auf die Prallfläche trifft, aufgrund der ihr jeweils innewohnenden kinetischen Energie auf dieser Prallfläche fein verteilt in Richtung der Randbereiche der Prallfläche getrieben. Der Einfluss der Schwerkraft tritt dabei gegenüber der in bezogen auf die Längsachse der Verteilkammer radialer Richtung wirkenden kinetischen Energie deutlich zurück. Im Ergebnis wird so erreicht, dass die auf die Prallfläche treffende viskose Flüssigkeit in gleichmäßiger Verteilung zu den Abströmkanälen gelangt.

Der dazu erforderliche fertigungstechnische Aufwand ist deutlich geringer als bei den aus dem Stand der Technik bekannten Vorrichtungen. So ist keine große Zahl von gruppenweise jeweils einem Abströmkanal zugeführten Abströmbohrungen mehr erforderlich, um eine gleichmäßige Aufteilung eines Schmierstoffstroms zu erreichen. Stattdessen reicht es aus, jeden Abströmkanal über seine an der Prallfläche angeordnete Anströmöffnung direkt mit der Flüssigkeit zu beschicken.

Im Ergebnis steht mit der Erfindung eine Vorrichtung zur Verfügung, die sich bei unverändert hoher Genauigkeit des Verteilergebnisses deutlich einfacher und kostengünstiger herstellen lässt als die aus dem Stand der Technik bekannten Vorrichtungen.

Eine besonders vorteilhafte Ausgestaltung der Erfindung ist **dadurch gekennzeichnet, dass** die Verteilkammer einen Trichterabschnitt aufweist, der sich ausgehend von seinem der Mündungsöffnung des Zuströmkanals zugeordneten Ende in Richtung der Prallfläche verengt. In Folge dieser immer enger werdenden Form des Trichterabschnitts steigt die Zentrifugalkraft, die auf die um die Längsachse der Verteilerkammer sich rotierend fortbewegende viskose Flüssigkeit wirkt, auf deren Weg in Richtung der Prallfläche stetig an. Strömungsverluste, denen die Flüssigkeit auf ihrem Weg durch die Verteilkammer unterworfen ist, werden ausgeglichen, so dass die Flüssigkeit mit der gewünscht hohen kinetischen Energie auf die Prallfläche trifft.

Günstig ist es in diesem Zusammenhang, wenn der Trichterabschnitt an seinem der Prallfläche zugeordneten Ende in einen Verteilabschnitt der Verteilkammer übergeht, an dessen zum betreffenden Ende des Trichterabschnitts gegenüberliegenden Wand die Prallfläche ausgebildet ist. Praktische Versuche haben ergeben, dass bei dieser Formgebung die auf die Prallfläche treffende Flüssigkeit wirkungsvoll zu deren Randbereichen strömt, ohne von der Schwerkraft beeinflusst zu sein. Besonders vorteilhaft ist es dabei, wenn die längs der Längsachse gemessene Länge des Verteilabschnitts wesentlich kürzer ist als die Länge der anderen Abschnitte der Verteilkammer. Bei einer derart kurzen Verteilkammer ist zwischen der Prallfläche und der ihr gegenüberliegenden, die Mündungsöffnung des Trichterabschnitts aufweisenden Wand nur ein Schlitz geringer Öffnungsweite ausgebildet. Durch diesen Schlitz strömt das zum Transport der viskosen Flüssigkeit eingesetzte Gas mit hoher Geschwindigkeit zu den Abströmbohrungen und unterstützt so die radiale Ausbreitung der auf der Prallfläche haftenden Flüssigkeit.

Weiter verbessert werden kann die Gleichmäßigkeit der Ausbreitung des Schmierstoffs auf der Prallfläche dadurch, dass der Übergang vom Trichterabschnitt in den Verteilabschnitt scharfkantig ausgebildet ist. Auf diese Weise wird erreicht, dass sich die Flüssigkeit an einem definierten Punkt von der Wand des Trichterabschnitts löst und sich frei durch den Verteilabschnitt bewegt, bis sie auf die Prallfläche trifft. Im Bereich des Übergangs andernfalls auftretende Strömungsverluste können so ausgeglichen werden. Als besonders wirkungsvoll erweist sich dieser Effekt dann, wenn die Länge der Verteilkammer auf ein Minimum reduziert ist, so dass besonders hohe Strömungsgeschwindigkeiten und ein dementsprechend schnelles und gleichmäßiges Verteilen des Schmierstoffs auf der Prallfläche erzielt werden.

Abhängig von der Formgebung der Prallfläche und des Trichterabschnitts sowie der Anordnung der Einströmöffnungen der Abströmkanäle kann es jedoch zweckmäßig sein, anstelle eines scharfkantigen Übergangs einen sich ausgehend von der engsten Stelle des Trichterabschnitts aufweitenden Düsentrichter am Übergang vom Trichterabschnitt in den Verteilabschnitt auszubilden. In diesem Fall wird die Wirbelströmung der viskosen Flüssigkeit und des Transportgases bis zu deren Auftreffen auf die Prallfläche sicher und mit hoher kinetischer Energie aufrechterhalten. Dementsprechend besonders gleichmäßig ist die Aufteilung der Flüssigkeit auf die Abströmbohrungen. Eine optimierte Funktionsweise dieser Variante der Erfindung lässt sich dabei dadurch erreichen, dass der Trichterabschnitt sprungfrei in den Verteilabschnitt übergeht.

Die unterstützende Wirkung der Transportgasströmung auf die Verteilung der Flüssigkeit kann dadurch noch verbessert werden, dass in die der Prallfläche gegenüberliegende Wand des Verteilabschnitts eine um die Austrittsöffnung des Trichters umlaufende Vertiefung eingeformt ist. Diese Vertiefung bewirkt, dass sich in der Verteilkammer eine verstärkte Drallströmung ausbildet, durch die auf die Flüssigkeit wirkenden Zentrifugalkräfte weiter erhöht und der störende Einfluss der Schwerkraft dementsprechend weiter minimiert wird. Um dabei die Strömungsverluste der Gas- und Flüssigkeitsströme so gering wir möglich zu halten, wird die Vertiefung bevorzugt nach Art einer Kehle ausgebildet.

Eine Optimierung der in der Verteilkammer erzeugten Wirbelströmung kann auch dadurch erreicht werden, dass im Bereich des der Mündungsöffnung des Zuströmkanals zugeordneten Endes der Kammer ein Strömungskörper angeordnet ist, dessen Querschnittsform und Längserstreckung so an den Querschnitt und die Längserstreckung der Verteilkammer angepasst sind, dass über mindestens einen Teilabschnitt der längs ihrer Längsachse gemessenen Länge der Kammer zwischen der Innenwand der Verteilkammer und dem Strömungskörper ein Ringspalt für die wirbelnde Gas-/Flüssigkeitsströmung ausgebildet ist. Durch diesen Ringspalt wird die in die Verteilkammer geleitete Strömung über mindestens ein Teilstück des Strömungsweges stark konzentriert und Strömungsverluste vermieden, die in Folge von Verwirbelung aufeinander treffender Randschichten der Wirbelströmung entstehen können.

Erfindungsgemäß wird die mindestens eine Mündungsöffnung des Zuströmkanals in geeigneter Weise so positioniert, dass die in der Verteilkammer zu erzeugende Wirbelströmung erreicht wird. Dabei können mehrere Mündungsöffnungen des Zuströmkanals oder mehrere separat voneinander in die Verteilkammer geführte Zuströmkanäle vorhanden sein, deren Mündungsöffnungen jeweils in für die Ausbildung der erfindungsgemäßen Wirbelströmung geeigneter Weise ausgerichtet sind. Ist ein Strömungskörper der voranstehend erläuterten Art vorgesehen, so kann zu diesem Zweck die jeweilige Mündungsöffnung in eine Umfangsfläche des Strömungskörpers eingeformt werden. Der Öl-/Gasstrom tritt dann mit einer bezogen auf die betreffende Umfangsfläche des Strömungskörpers überwiegend radialen Ausrichtung aus dem Strömungskörper aus. Alternativ oder ergänzend ist es auch möglich, die Einleitung der Öl-/Gasströmung in die Verteilkammer über eine Innenumfangsfläche der Verteilkammer vorzunehmen. Dazu wird die Mündungsöffnung des Zuströmkanals in die betreffende Innenumfangsfläche der Verteilerkammer eingeformt, so dass die Öl-/Gasströmung wiederum mit starker radialer Ausrichtung in die Verteilkammer eintritt. In Fällen, in denen kein Strömungskörper in der Verteilkammer vorhanden ist, lässt sich die Mündungsöffnung bei geeigneter Ausbildung auch in eine Stirnfläche der Verteilkammer einformen. Um bei einer solchen Anordnung eine erfindungsgemäße Wirbelströmung in der Verteilkammer auszubilden, wird das in die Mündungsöffnung übergehende Endstück des Zuströmkanals beispielsweise schraubenförmig nach Art des Endstücks eines Korkenziehers oder so schräg geführt, dass der Öl-/Gasstrom mit einer stark radialen Ausrichtung in die Verteilkammer eintritt. Unabhängig davon, an welcher Stelle die Verteilkammer angeordnet ist, sollte dabei die Ausrichtung des in die Mündungsöffnung mündenden Teilstücks des Zuströmkanals jeweils so gewählt werden, dass eine für die Entstehung des in Richtung Prallfläche fortschreitenden Wirbels ausreichende Axialkomponente der Strömung vorhanden ist.

Weiter verbessert werden kann die Verteilung der Flüssigkeit auf der Prallfläche dadurch, dass sich auf der Prallfläche ein Anströmkörper erhebt. Auch dieser Anströmkörper unterstützt die Ausbildung einer radial nach Außen gerichteten Strömung auf der Prallfläche. Zu diesem Zweck wird der Anströmkörper bevorzugt zentral auf der Prallfläche angeordnet und ist kegelförmig ausgebildet.

Alternativ oder zusätzlich kann die Gleichmäßigkeit der auf der Prallfläche stattfindenden Abströmbewegung der Flüssigkeit dadurch unterstützt werden, dass die Prallfläche konkav ausgebildet ist. Dazu kann die Prallfläche auch trichterförmig eingewölbt sein.

Um den Einbau einer erfindungsgemäßen Vorrichtung beispielsweise in das Gerüst eines Walzwerks oder vergleichbarer Maschinen zu erleichtern, kann die Vorrichtung eine zylindrische Gehäuseform besitzen, die sich auf einfache Weise in eine ebenso geformte Bohrung einschieben lässt.

Nachfolgend wir die Erfindung anhand einer ein Ausführungsbeispiel darstellenden Zeichnung näher erläutert. Es zeigen:
- Fig. 1: eine erste Vorrichtung zum Aufteilen eines fließfähigen, mittels eines Luftstroms transportierten Schmierstoffs auf vier Abströmbohrungen im Längsschnitt;
- Fig. 2: eine zweite Vorrichtung zum Aufteilen eines fließfähigen, mittels eines Luftstroms transportierten Schmierstoffs auf vier Abströmbohrungen im Längsschnitt.

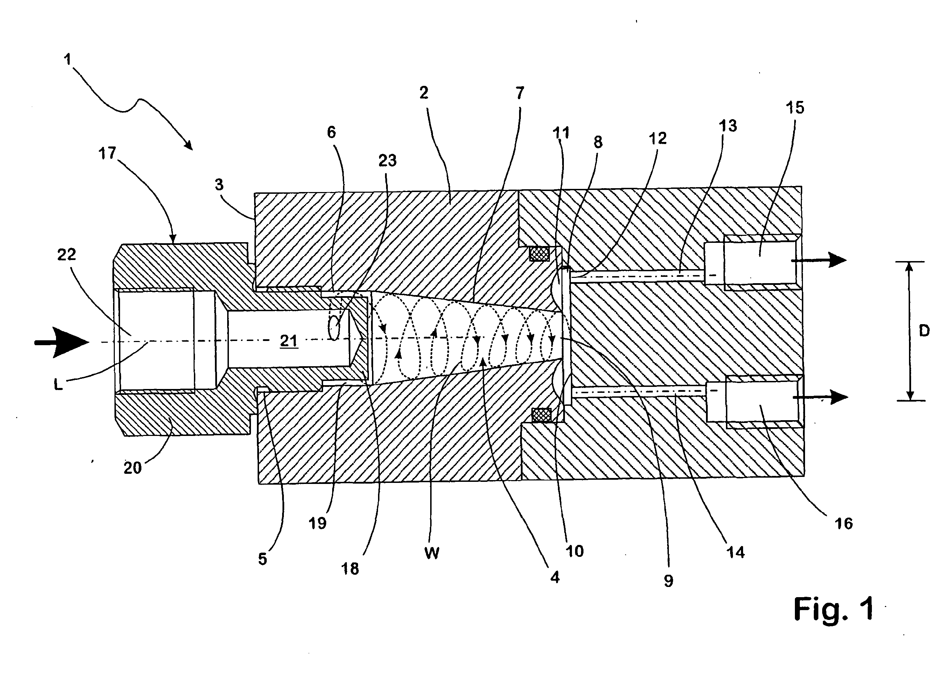

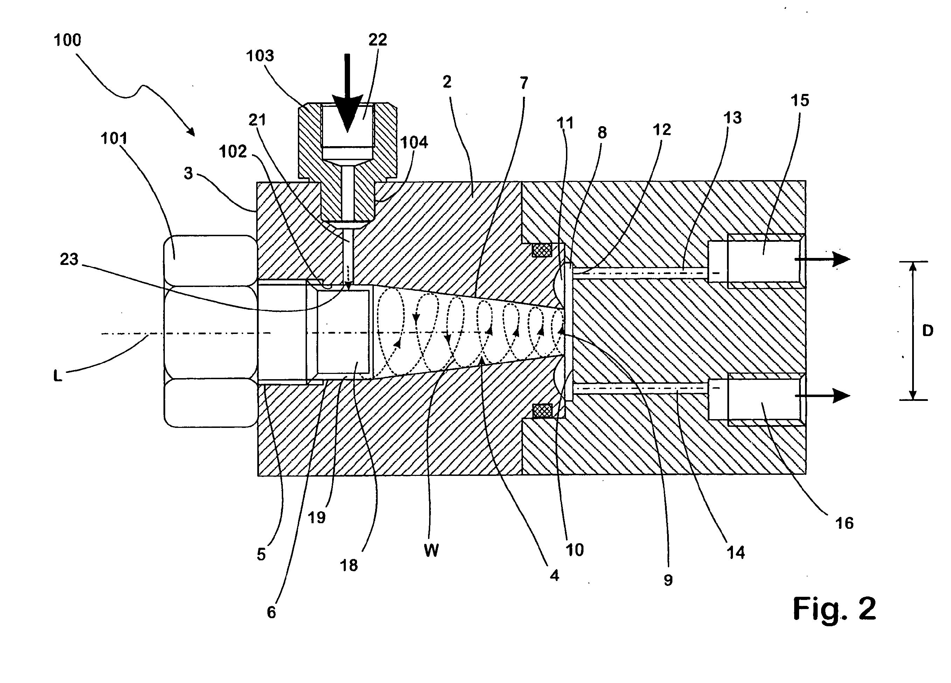

Die in den Figuren 1 und 2 dargestellten Vorrichtungen 1 und 100 dienen jeweils zum Aufteilen eines fließfähigen, mittels eines Luftstroms transportierten Schmierstoffs auf vier Abströmbohrungen im Längsschnitt. Bei dem Schmierstoff handelt es sich um eine viskose Flüssigkeit, während der Luftstrom den Gasstrom bildet, der die viskose Flüssigkeit vorantreibt.

Die Vorrichtungen 1 und 100 haben ein blockförmiges Gehäuse 2, in dessen in den Figuren jeweils links dargestellten Hälfte ausgehend von deren Stirnseite 3 eine Verteilkammer 4 eingeformt ist. Die Verteilkammer 4 weist einen an die Stirnseite 3 angeschlossenen Innengewindeabschnitt 5, einen an den Innengewindeabschnitt 5 angeschlossenen Zylinderabschnitt 6 und einen sich an den Zylinderabschnitt 6 angeschlossenen Trichterabschnitt 7, der in einen Verteilabschnitt 8 der Verteilkammer 4 übergeht.

Ausgehend von dem Zylinderabschnitt 6 nimmt der kreisrunde Querschnitt des Trichterabschnitts 7 in Richtung des Verteilabschnitts 8 der Verteilkammer 4 stetig ab, so dass der Trichterabschnitt 7 an der Stelle seiner Austrittsöffnung 9 zum Verteilabschnitt 8 seine geringste Weite hat. Der Übergang zwischen dem Trichterabschnitt 7 und dem Verteilabschnitt 8 ist dabei scharfkantig ausgebildet.

Die in Richtung der Längserstreckung der Verteilkammer 4 gemessene Länge des Verteilabschnitts 8 beträgt im dargestellten Ausführungsbeispiel lediglich ca. 2,5 % der Gesamtlänge der Verteilkammer 4. Der Verteilabschnitt 8 ist damit deutlich kürzer als jeder andere Abschnitt der Verteilkammer 4. Gleichzeitig ist jedoch der Durchmesser D des Verteilabschnitts 8 größer als der Durchmesser des Zylinderabschnitts 6. An der der Austrittsöffnung 9 des Trichterabschnitts 7 gegenüber liegenden Wand ist eine ebene Prallfläche 10 ausgebildet, die kreisrund ausgebildet und koaxial zur Längsachse L der Verteilkammer 4 ausgerichtet ist. In die der Prallfläche 10 gegenüber liegenden Wand, ist eine um die Austrittsöffnung 9 des Trichterabschnitts 7 umlaufende, kehlenförmige Vertiefung 11 eingeformt. Der Außendurchmesser der Vertiefung 11 stimmt mit dem Durchmesser D des Verteilabschnitts 8 überein.

Im äußeren Randbereich der Prallfläche 10 sind die Einströmöffnungen 12 von Abströmkanälen angeordnet, die in gleichen Winkelabständen von jeweils 90° um die Längsachse L verteilt positioniert sind. Von diesen Abströmkanälen sind in der Figur lediglich der in der gezeigten Montagestellung oben liegende Abströmkanal 13 und der unten liegende Abströmkanal 14 zu erkennen. Die Abströmkanäle münden in Abschlussbohrungen 15,16, in die konventionelle, hier nicht dargestellte, zu einem Verbraucher, beispielsweise einem Lager eines ebenfalls nicht gezeigten Walzgerüstes führende Versorgungsleitungen eingeschraubt werden können.

In den Innengewindeabschnitt 5 der Verteilkammer 4 ist mit seinem Außengewindeabschnitt ein Anschlussstück 17 eingeschraubt. Das Anschlussstück 17 weist einen zylindrischen Strömungskörper 18 auf, dessen Außendurchmesser derart an den Verlauf der Innenwand des Zylinderabschnitts 6 angepasst ist, dass zwischen dem Strömungskörper 18 und der Innenwand ein Ringspalt 19 von geringer Höhe ausgebildet ist.

Zusätzlich weist bei der Vorrichtung 1 das Anschlussstück 17 einen im montierten Zustand frei über die Stirnseite 3 des Gehäuses 2 der Vorrichtung 1 hinausstehenden Befestigungsabschnitt 20 auf, dessen dem Gehäuse 2 zugeordnete Dichtfläche dicht an der Stirnfläche 3 anliegt.

Bei der Vorrichtung 1 ist in das Anschlussstück 17 ein Zuströmkanal 21 eingeformt, der im Bereich des Befestigungsabschnitts 20 eine Einströmöffnung 22 in Form einer auf der freien Stirnfläche des Befestigungsabschnitts 20 mündenden Innengewindebohrung ausgebildet ist. In diese Innengewindebohrung kann eine nicht dargestellte von einer Druckluft- und Schmierstoffversorgung kommende Versorgungsleitung eingeschraubt werden. Der Zuströmkanal 21 erstreckt sich nach Art einer Sacklochbohrung bis in den Strömungskörper 18 des Anschlussstücks 17. Tangential von der Umfangsfläche des dem Zylinderabschnitt 6 der Verteilkammer 4 zugeordneten Abschnitts des Strömungskörpers 18 ist eine tangential austretende Mündungsöffnung 23 an den Zuströmkanal 21 herangeführt. In entsprechender Weise können weitere in die Verteilkammer 4 führende Mündungsöffnungen dieser Art vorgesehen sein.

Die in Fig. 2 dargestellte Vorrichtung 100 ist bis auf die Anordnung der Einströmöffnung 22 und des Zuströmkanals 21 sowie die Anordnung der Mündungsöffnung 23 und des Anschlussstücks in derselben Weise aufgebaut und geformt wie die Vorrichtung 1.

Im Unterschied zur Vorrichtung 1 ist bei der Vorrichtung 100 jedoch ein Stopfen 101 in den Innengewindeabschnitt 5 der Verteilkammer 4 eingeschraubt. Wie bei der Vorrichtung 1 das Anschlussstück 17 so trägt der Stopfen 101 bei der Vorrichtung 100 an seinem in die Verteilkammer 4 hineinreichenden Ende den zylindrisch ausgebildeten Strömungskörper 18. Dementsprechend ist auch bei der Vorrichtung 100 zwischen dem Strömungskörper 18 und der Innenumfangsfläche 102 des Zylinderabschnitts 6 der Verteilkammer 4 ein Ringspalt 19 ausgebildet.

In diesen Ringspalt 19 mündet bei der Vorrichtung 100 die Mündungsöffnung 23 des Zuströmkanals 21, die in die Innenumfangsfläche 102 des Zylinderabschnitts 6 der Verteilkammer 4 eingeformt ist. Der Zuströmkanal 21 ist bei der Vorrichtung 100 zu diesem Zweck aus radialer Richtung kommend zur Verteilkammer 4 geführt. Seine Einströmöffnung 22 ist dabei in einem Anschlussstück 103 ausgebildet, das in eine Anschlussbohrung 104 des Gehäuses 2 eingeschraubt ist, so dass es in seitlicher Richtung von dem Gehäuse 2 absteht.

Die Mündungsöffnungen 23 bilden jeweils eine Düse, über die der durch den Zuströmkanal 21 strömende Schmierstoff-/Luftstrom in den Ringspalt 19 der Verteilkammer 4 in Form einer Radialströmung eingebracht wird. Der Schmierstoff/Luftstrom wird dabei neben einer bezogen auf die Längsachse L der Verteilkammer 4 starken radial ausgerichteten Geschwindigkeitskomponente mit einer achsparallel zur Längsachse L gerichteten Geschwindigkeitskomponente ausgebracht. Auf diese Weise entsteht in der Verteilkammer 4 eine konzentrierte, deren Längsachse L umlaufende, aus Schmierstoff- und Luftströmung gebildete Wirbelströmung W, die sich mit hoher kinetischer Energie nach Art eines Zyklons in Richtung der Prallfläche 10 bewegt. Unter Idealbedingungen kommt es im Trichterabschnitt 7 dabei in Folge von dessen in Richtung der Prallfläche 7 eintretenden Querschnittsverengung zu einer stetigen Zunahme der in radialer Richtung gerichteten Geschwindigkeitskomponente. In der Praxis gleicht diese Zunahme Strömungsverluste aus, zu denen es in Folge der Reibung zwischen den Innenflächen der Verteilkammer 4 und der mit ihr in Kontakt kommenden Schmierstoff-/Luftströmung kommt.

In der Austrittsöffnung 9 des Trichterabschnitts 7 reißt die nach wie vor mit hoher kinetischer Energie umlaufende Wirbelströmung von der Innenfläche 103 der Verteilkammer 4 ab. Sie tritt mit hoher radialer Geschwindigkeit in den Verteilabschnitt 8 ein und trifft mit entsprechend hoher kinetischer Energie auf die Prallfläche 10. In Folge des Aufpralls verteilt sich der Schmierstoff als dünner Film gleichmäßig auf der Prallfläche 10 und strömt unter Einwirkung der beim Aufprall frei werdenden Zentrifugalkraft mit nach wie vor hoher Geschwindigkeit zu deren Randbereichen, an denen die Einströmöffnungen 12 der Prallfläche 10 angeordnet sind. Der im Randbereich der Prallfläche 10 am Umfang des Verteilabschnitts 8 sich sammelnde Schmierstoff tritt in die Einströmöffnungen 12 ein und tritt über die Abströmkanäle 13,14 in die an die Anschlussbohrungen 15,16 angeschlossenen, hier nicht dargestellten Versorgungsleitungen.

Unterstützt wird die gleichmäßige Verteilung des Schmierstoffs auf der Prallfläche 10 durch den Luftstrom, der mit hoher Geschwindigkeit durch den zwischen der Prallfläche 10 und der gegenüberliegenden Wand gebildeten schmalen Spalt strömt. Im Bereich der kehlenförmigen Vertiefung 11 bildet der Luftstrom eine Verwirbelung, durch den der sich am Umfang der Prallfläche sammelnde Schmierstoff verstärkt in die Abströmkanäle getrieben wird.

Praktische Versuche haben gezeigt, dass sich mit den erfindungsgemäßen Vorrichtungen 1 und 100 eine gleichmäßige Aufteilung des Schmierstoffstroms auf die vier Abströmkanäle 13,14 erzielen lässt. Die Anzahl der dazu erforderlichen Bohrungen ist dabei ebenso auf ein Minimum reduziert wie die Bearbeitungsschritte, die zur Fertigung der Verteilkammer 4 erforderlich sind. Im Ergebnis steht so eine Vorrichtung zum Aufteilen einer mittels einer Gasströmung transportierten viskosen Flüssigkeit in mindestens zwei Teilströme zur Verfügung, die sich mit gegenüber dem Stand der Technik deutlich vermindertem fertigungstechnischen Aufwand kostengünstig herstellen lässt.

### BEZUGSZEICHEN

- 1,100: Vorrichtungen zum Aufteilen eines fließfähigen, mittels eines Luftstroms transportierten Schmierstoffs
- 2: Gehäuse
- 3: Stirnseite des Gehäuses 2
- 4: Verteilkammer
- 5: Innengewindeabschnitt der Verteilkammer 4
- 6: Zylinderabschnitt der Verteilkammer 4
- 7: Trichterabschnitt der Verteilkammer 4
- 8: Verteilabschnitt der Verteilkammer 4
- 9: Austrittsöffnung am Übergang des Trichterabschnitts 7 zum Verteilabschnitt 8
- 10: Prallfläche
- 11: Vertiefung
- 12: Einströmöffnungen der Abströmkanäle 13,14
- 13,14: Abströmkanäle
- 15,16: Abschlussbohrungen
- 17: Anschlussstück
- 18: Strömungskörper
- 19: Ringspalt
- 20: Befestigungsabschnitt
- 21: Zuströmkanal
- 22: Einströmöffnung des Zuströmkanals 21
- 23: Mündungsöffnung 23 des Zuströmkanals 21
- 101: Stopfen
- 102: Innenumfangsfläche des Zylinderabschnitts 6
- 103: Anschlussstück
- 104: Anschlussbohrung des Gehäuses 2
- D: Durchmesser des Verteilabschnitts 8
- L: Längsachse der Verteilkammer 4
- W: Wirbelströmung

## Patentansprüche

1. Vorrichtung zum Aufteilen einer mittels einer Gasströmung transportierten viskosen Flüssigkeit in mindestens zwei Teilströme
- mit einem Zuströmkanal (21),
- mit einer Verteilkammer(4), in die der Zuströmkanal (21) mündet,
- mit einer in der Verteilkammer (4) ausgebildeten Prallfläche (10), auf die die Gasströmung trifft,
- mit mindestens zwei Abströmkanälen (13,14), deren jeweilige Einströmöffnung (12) im Randbereich der Prallfläche (10) positioniert ist,
- wobei die Verteilkammer (4) einen Trichterabschnitt (7), der sich ausgehend von seinem der Mündungsöffnung (23) des Zuströmkanals (21) zugeordneten Ende in Richtung der Prallfläche (10) verengt, und einen Verteilabschnitt (8) aufweist, in den der Trichterabschnitt (7) an seinem der Prallfläche (10) zugeordneten Ende scharfkantig übergeht und an dessen zum betreffenden Ende des Trichterabschnitts (7) gegenüberliegenden Wand die Prallfläche (10) ausgebildet ist, und wobei mindestens eine Mündungsöffnung (23) des Zuströmkanals (21) derart ausgerichtet ist, dass die aus ihr austretende Gas-/ Flüssigkeitsströmung sich in einer um die Längsachse (L) der Verteilkammer (4) umlaufenden Wirbelströmung (W) in Richtung der Prallfläche (10) bewegt.

2. Vorrichtung nach Anspruch 1, **dadurch gekennzeichnet, dass** die längs der Längsachse (L) gemessene Länge des Verteilabschnitts (8) wesentlich kürzer ist als die Länge der anderen Abschnitte (5,6,7) der Verteilkammer (4).

3. Vorrichtung nach einem der voranstehenden Ansprüche, **dadurch gekennzeichnet, dass** in die der Prallfläche (10) gegenüberliegenden Wand des Verteilabschnitts (8) eine um die Austrittsöffnung (9) des Trichterabschnitts (7) umlaufende Vertiefung (11) eingeformt ist.

4. Vorrichtung nach Anspruch 3, **dadurch gekennzeichnet, dass** die Vertiefung (11) nach Art einer Kehle ausgebildet ist.

5. Vorrichtung nach einem der voranstehenden Ansprüche, **dadurch gekennzeichnet, dass** im Bereich des der Mündungsöffnung (23) des Zuströmkanals (21) zugeordneten Endes der Verteilkammer (4) ein Strömungskörper (18) angeordnet ist, dessen Querschnittsform und Längserstreckung so an den Querschnitt und die Längserstreckung der Verteilkammer (4) angepasst sind, dass über mindestens einen Teilabschnitt der längs ihrer Längsachse (L) gemessenen Länge der Verteilkammer (4) zwischen der Innenwand der Verteilkammer (4) und dem Strömungskörper (18) ein Ringspalt (19) für die wirbelnde Gas-/Flüssigkeitsströmung ausgebildet ist.

6. Vorrichtung nach Anspruch 5, **dadurch gekennzeichnet, dass** die Mündungsöffnung (23) des Zuströmkanals (21) in eine Umfangsfläche des Strömungskörpers (18) eingeformt ist.

7. Vorrichtung nach einem der voranstehenden Ansprüche, **dadurch gekennzeichnet, dass** die Mündungsöffnung des Zuströmkanals (21) in eine Innenumfangsfläche der Verteilerkammer (4) eingeformt ist.

8. Vorrichtung nach einem der voranstehenden Ansprüche, **dadurch gekennzeichnet, dass** die Mündungsöffnung des Zuströmkanals (21) in eine Stirnfläche der Verteilkammer eingeformt ist.

9. Vorrichtung nach einem der voranstehenden Ansprüche, **dadurch gekennzeichnet, dass** sich auf der Prallfläche (10) ein Anströmkörper erhebt.

10. Vorrichtung nach einem der voranstehenden Ansprüche, **dadurch gekennzeichnet, dass** der Anströmkörper zentral auf der Prallfläche (10) angeordnet ist.

11. Vorrichtung nach einem der Ansprüche 9 oder 10, **dadurch gekennzeichnet, dass** der Anströmkörper (10) kegelförmig ausgebildet ist.

12. Vorrichtung nach einem der voranstehenden Ansprüche, **dadurch gekennzeichnet, dass** die Prallfläche (10) konkav ausgebildet ist.

13. Vorrichtung nach Anspruch 12, **dadurch gekennzeichnet, dass** die Prallfläche (10) trichterförmig eingewölbt ist.

## Claims

1. Device for dividing a viscous liquid conveyed by a gas flow into at least two partial flows
- with an inflow channel (21)
- with a distribution chamber (4), into which the flow channel (21) opens,
- with an impinging surface (10) formed in the distribution chamber, onto which the gas flow impinges,
- with at least two outflow channels (13, 14), of which the inflow aperture (12) in each case is positioned in the edge area of the impinging surface (10),
- whereby the distribution chamber (4) comprises a funnel section (7), which narrows going from its end facing the mouth aperture (23) of the inflow channel (21) in the direction of the impinging surface (10), and a distribution section (8), into which the funnel section (7) merges in sharp edged fashion at its end facing the impinging surface (10), and at the wall of which, opposite the end concerned of the funnel section (7), the impinging surface is formed, and whereby at least one mouth aperture (23) of the flow channel (21) is aligned in such a way that the gas/liquid flow emerging from it moves in the direction of the impinging surface (10) in a rotational flow (W) circulating about the longitudinal axis (L) of the distribution chamber (4).

2. Device according to Claim 1, **characterised in that** the length of the distribution section (8), measured along the length of the longitudinal axis (L), is substantially shorter than the length of the other sections (5, 6, 7) of the distribution chamber (4).

3. Device according to one of the foregoing Claims, **characterised in that** a circumferential depression (11), running around the outlet aperture (9) of the funnel section, is formed into the wall of the distribution section (8) opposite the impinging surface (8).

4. Device according to Claim 3, **characterised in that** the depression (11) is formed in the shape of a chamfer.

5. Device according to one of the foregoing Claims, **characterised in that** a flow body (18) is arranged in the area of the end of the distribution chamber (4) facing the mouth aperture (23) of the inflow channel (21), the cross-section and longitudinal extension of which are matched to the cross-section and longitudinal extension of the distribution chamber (4) in such a way that a ring gap (19) for the rotating gas/liquid flow is formed between the inner wall of the distribution chamber (4) and the flow body (18), over at least a part section of the length of the distribution chamber (4) measured along its longitudinal axis (L).

6. Device according to Claim 5, **characterised in that** the mouth aperture (23) of the inflow channel (21) is formed into a circumferential surface of the flow body (18).

7. Device according to one of the foregoing Claims, **characterised in that** the mouth aperture of the inflow channel (21) is formed into an inner circumferential surface of the distribution chamber (4).

8. Device according to one of the foregoing Claims, **characterised in that** the mouth aperture of the inflow channel (21) is formed into a face surface of the distribution chamber.

9. Device according to one of the foregoing Claims, **characterised in that** a flow profile protrudes on the impinging surface (10).

10. Device according to one of the foregoing Claims, **characterised in that** the flow profile is arranged centrally on the impinging surface (10).

11. Device according to one of Claims 9 or 10, **characterised in that** the flow profile (10) is designed in conical shape.

12. Device according to one of the foregoing Claims, **characterised in that** the impinging surface (10) is designed to be concave.

13. Device according to Claim 12, **characterised in that** the impinging surface (10) is cambered in funnel fashion.

## Revendications

1. Dispositif pour répartir en au moins deux courants partiels un liquide visqueux, transporté au moyen d'un écoulement de gaz,
- avec un canal d'admission du courant (21),
- avec une chambre de répartition (4), dans laquelle débouche le canal d'admission du courant (21),
- avec une surface d'impact (10), formée dans la chambre de répartition (4), sur laquelle vient porter le courant de gaz,
- avec au moins deux canaux de sortie du courant (13, 14), dont l'ouverture d'admission (12) respective est positionnée dans la région marginale de la surface d'impact (10),
- la chambre de répartition (4) présentant une section en entonnoir (7), qui s'amincit, à partir de son extrémité associée au débouché (23) du canal d'admission du courant (21), en direction de la surface d'impact (10), et une section de répartition (8), à laquelle se raccorde à arête vive la section en entonnoir (7), à son extrémité associée à la surface d'impact (10), et sur la paroi, opposée à l'extrémité concernée de la section en entonnoir (7), de laquelle est formée la surface d'impact (10), et au moins un débouché (23) du canal d'admission du courant (21) étant orientée de sorte que le courant de gaz / de liquide, sortant d'elle, est mû, sous la forme d'un courant tourbillonnaire (W), autour de l'axe longitudinal (L) de la chambre de répartition (4), dans la direction de la surface d'impact (10).

2. Dispositif selon la revendication 1, **caractérisé en ce que** la longueur de la section de répartition (8), mesurée le long de l'axe longitudinal (L), est sensiblement plus courte que la longueur des autres sections (5, 6, 7) de la chambre de répartition (4).

3. Dispositif selon l'une des revendications précédentes, **caractérisé en ce que,** dans la paroi de la section de répartition (8), opposée à la surface d'impact (10), est formée une cavité (11), qui entoure l'ouverture de sortie (9) de la section en entonnoir (7).

4. Dispositif selon la revendication 3, **caractérisé en ce que** la cavité (11) est formée dans le genre d'une gorge.

5. Dispositif selon l'une des revendications précédentes, **caractérisé en ce que,** dans la région de l'extrémité de la chambre de répartition (4, associée au débouché (23) du canal d'admission du courant (21), est disposé un corps d'écoulement (18), dont la forme de section transversale et l'extension longitudinale sont adaptées à la section transversale et à l'extension longitudinale de la chambre de répartition (4) de sorte que, sur au moins un section partielle de la longueur de la chambre de répartition (4), mesurée le long de l'axe longitudinal (L), est formé, entre la paroi intérieure de la chambre de répartition (4) et le corps d'écoulement (18), un interstice annulaire (19) pour le courant tourbillonnaire de gaz / de liquide.

6. Dispositif selon la revendication 5, **caractérisé en ce que** la bouche (23) du canal d'admission du courant (21) est formée dans une surface périphérique du corps d'écoulement (18).

7. Dispositif selon l'une des revendications précédentes, **caractérisé en ce que** le débouché du canal d'admission du courant (21) est formé dans une paroi périphérique intérieure de la chambre de répartition (4).

8. Dispositif selon l'une des revendications précédentes, **caractérisé en ce que** le débouché du canal d'admission du courant (21) est formé dans une surface frontale de la chambre de répartition.

9. Dispositif selon l'une des revendications précédentes, **caractérisé en ce qu'**un corps d'admission du courant s'élève sur la surface d'impact (10).

10. Dispositif selon l'une des revendications précédentes, **caractérisé en ce que** le corps d'admission du courant est disposé centralement sur la surface d'impact (10).

11. Dispositif selon l'une des revendications 9 ou 10, **caractérisé en ce que** le corps d'admission du courant est disposé centralement sur la surface d'impact (10)

12. Dispositif selon l'une des revendications précédentes, **caractérisé en ce que** la surface d'impact (10) est de conception concave.

13. Dispositif selon la revendication 12, **caractérisé en ce que** la surface d'impact (10) est voûtée en forme d'entonnoir.
